# FASCICULE DE BREVET EUROPEEN

(11) **EP 2 366 038 B1**
(45) Date de publication et mention de la délivrance du brevet: **14.02.2018**
(21) Numéro de dépôt: 09771778.9
(22) Date de dépôt: 13.11.2009
(51) Int. Cl.: B07C 5/344, B03C 1/30, C22B 7/00

(54) **PROCÉDÉ DE RÉCUPERATION DES MÉTAUX CONTENUS DANS LES DÉCHETS ÉLECTRONIQUES**
VERFAHREN ZUR WIEDERGEWINNUNG VON METALLEN AUS ELEKTRONIKABFÄLLEN
METHOD FOR RECOVERING METALS CONTAINED IN ELECTRONIC WASTE

(30) Priorité: 14.11.2008 FR 0806357
(43) Date de publication de la demande: 21.09.2011
(73) Titulaire: WEEE METALLICA, 62330 Isbergues (FR)
(72) Inventeur: THOMAS, Christian, F-78240 Chambourcy (FR); MENUET, Joël, F-62420 Billy-montigny (FR); VANHELLE, Gervais, F-62590 Oignies (FR)
(74) Mandataire: Novagraaf Technologies
(86) Numéro de dépôt international: PCT/IB2009/055059
(87) Numéro de publication internationale: WO 2010/055489

(56) Documents cités:
- EP-A- 0 403 695
- EP-A- 0 682 099
- WO-A-2005/084839
- CN-A- 1 402 376
- FR-A- 2 247 287
- FR-A- 2 690 928
- JP-A- 8 238 472
- JP-A- 2001 046 975
- US-A- 5 301 881
- MESSINEO A ET AL: "Municipal waste management in Sicily: Practices and challenges", WASTE MANAGEMENT, ELSEVIER, NEW YORK, NY, US, vol. 28, no. 7, 2 July 2007 (2007-07-02), pages 1201-1208, XP022613798, ISSN: 0956-053X, DOI: 10.1016/J.WASMAN.2007.05.003 [retrieved on 2008-01-01]

## Description

### DOMAINE DE L'INVENTION

La présente invention concerne un procédé de récupération des métaux contenus dans les déchets électroniques, notamment les cartes électroniques usagées, ainsi qu'une installation adaptée à la mise en oeuvre de ce procédé.

### ARRIERE-PLAN TECHNIQUE

L'accroissement de l'utilisation des calculatrices, des téléphones portables, des appareillages électroniques et autres appareils de haute technicité à courte durée de vie engendre une quantité croissante de déchets contenant typiquement des métaux ferreux, du cuivre, de l'aluminium, du zinc, des métaux rares et précieux... Cette situation pose le problème de la récupération et du traitement des métaux contenus dans ces déchets. Ainsi, de tels déchets constituent un véritable gisement de métaux.

Une technique connue de récupération des métaux consiste à charger les déchets (préalablement broyés à environ 4 cm) dans des fours primaires ou fours à cuivre. Cette technique engendre de fortes émissions de poussières, de dioxyde de soufre et de gaz contenant des halogènes (chlore et brome). Les gaz émis exigent donc un traitement ultérieur complexe. Un autre problème rencontré avec cette technique est que les déchets électroniques dégagent beaucoup de chaleur lors de la combustion du plastique qu'elles contiennent. En d'autres termes le pouvoir calorifique élevé des déchets électroniques est un obstacle à cette technique. La teneur en aluminium souvent élevée dans les déchets traités constitue encore un autre problème, puisque la présence d'aluminium dans les scories ou laitiers augmente leur température de fusion de façon telle que leur traitement devient très difficile. En raison de ces divers inconvénients, la capacité des fours primaires pour traiter les déchets électroniques est limitée.

D'autres techniques de récupération utilisent des procédés de broyage fin, suivi d'une séparation magnétique et électrostatique permettant d'enrichir et de trier des phases riches et pauvres en métaux. Par exemple, le document WO 2007/099204 présente une méthode comprenant le broyage des déchets en particules de 2-4 mm, la mise en charge électrostatique des matériaux par frottement contre un tambour, suivie d'un bombardement d'électrons, et enfin le tri des matériaux au moyen d'un champ électrique. Toutefois, les techniques de ce type sont onéreuses (en particulier en raison du broyage fin qui est nécessaire), n'assurent qu'un tri imparfait et aboutissent donc à un mauvais rendement de récupération des métaux précieux.

Selon une autre approche, le document EP 1712301 décrit un procédé de traitement des déchets électroniques dans lequel les fragments de fil métalliques sont récupérés parmi les déchets au moyen d'un barillet muni d'une bande textile à laquelle les fragments de fil adhèrent.

Le document FR-A-2 690 928 décrit un procédé et une installation pour le traitement de matériaux composites plastique-métal. L'installation est essentiellement caractérisée en ce qu'elle comprend :
- une enceinte de traitement thermique alimentée en déchets de matériau composite et dans laquelle on effectue la pyrolyse de ces déchets à une température comprise entre 350 et 450°C, de préférence environ 400°C, les gaz de combustion des liants contenus dans le matériau composite étant évacués à partir de ladite enceinte pour être traités et épurés par des moyens classiques ;
- des moyens de broyage recevant le matériau provenant de l'enceinte de traitement thermique ;
- des moyens assurant la séparation des constituants métalliques valorisables des sous-produits et
- des moyens de conditionnement des constituants métalliques ainsi séparés.

Le document WO 2005/084839 décrit décrit un procédé de traitement de déchets mixtes organiques / métaux. Le procédé enseigné par ce document consiste en un broyage des déchets jusqu'à une taille de particules allant de 5 à 25 mm, suivi d'un traitement thermique entre 350 et 600°C en milieu réducteur et simultanément, un cisaillement par des lames. Les résidus métalliques sont ensuite séparés à l'aide de moyens mécaniques ou de procédés métallurgiques classiques, ou de moyens chimiques.

Le document EP-A-0 682 099 décrit un procédé de traitement de déchets d'emballage et/ou de matériaux plastiques. Le produit est traité par pyrolyse puis la fraction métallique est séparée de la fraction carbonée par des moyens mécaniques ou magnétiques. Les déchets traités dans ce document sont des déchets pauvres en métaux. Ce document ne décrit pas de déchets électroniques. La présence de métaux précieux n'est pas envisagée.

Le document intitulé « Municipal waste management in Sicily : Practices and challenges » par Antonio Messineo et Domenico Panno publié dans la revue Waste Management, n°28, (2008), pages 1201-1208 décrit un plan de gestion des déchets solides en Sicile. Ce document décrit en particulier au point 4.1 un procédé de purification des gaz issus de la combustion des déchets. Un dispositif de purification des gaz issus de la combustion comprend du charbon actif pour piéger le mercure et les dioxines-furanes. Il comprend également un système de neutralisation des gaz acides par du carbonate de sodium.

Des tentatives ont également été menées afin de récupérer les métaux par pyrolyse en lit fluidisé. Toutefois, cette technique a pour inconvénient de mélanger les métaux avec un additif (support de fluidisation) tel que du sable, du quartz..., ce qui complique la récupération. En effet, le tamisage qui est effectué en aval de la pyrolyse ne permet pas de séparer efficacement l'additif de certaines poussières métalliques. De plus un tel procédé consomme plus d'énergie, une partie des métaux s'oxydent et des métaux sont entraînés dans la phase gazeuse.

Il existe donc un réel besoin de mettre au point un procédé de récupération des métaux contenus dans les déchets électroniques, qui permette de surmonter les désavantages susmentionnés. En particulier, on souhaite mettre au point un procédé simple, consommant relativement peu d'énergie, ne nécessitant pas un traitement lourd des gaz émis, et permettant d'obtenir un bon rendement en métaux recyclés.

### RESUME DE L'INVENTION

L'invention concerne en premier lieu un procédé de traitement de matériaux contenant un mélange de matières plastiques et de matières métalliques selon la revendication 1.

Selon un mode de réalisation, les déchets électroniques sont des cartes électroniques usagées.

Selon un mode de réalisation, le broyage est effectué jusqu'à un passant de tamis Dmax inférieur ou égal à 50 mm, de préférence compris entre 20 et 30 mm.

Selon un mode de réalisation, le procédé comprend également une étape de combustion des gaz issus de la pyrolyse, éventuellement suivie d'une étape de neutralisation des gaz avec du bicarbonate de sodium.

Selon un mode de réalisation, la fraction métallique ferreuse comprend du fer et / ou des dérivés de fer, et éventuellement de l'or.

Selon un mode de réalisation, la fraction métallique non-ferreuse comprend du zinc.

Selon un mode de réalisation, les résidus non-magnétiques comprennent du cuivre, du plomb, de l'étain, des fibres de verre, du carbone et / ou des métaux précieux, notamment de l'or, de l'argent, du platine, du palladium, du rhodium, du ruthénium, de l'iridium et / ou de l'osmium.

Selon un mode de réalisation, la fraction métallique ferreuse est combinée aux résidus non-magnétiques après la deuxième séparation magnétique.

Selon un mode de réalisation, le procédé comprend une étape ultérieure de traitement des résidus non-magnétiques permettant de récupérer le cuivre contenu dans les résidus non-magnétiques et / ou de récupérer des métaux précieux contenus dans les résidus non-magnétiques, en particulier choisis parmi l'or, l'argent, le plomb, l'étain le platine, le palladium, le rhodium, le ruthénium, l'iridium et / ou l'osmium.

L'invention a également pour objet une installation de traitement de matériaux contenant un mélange de matières plastiques et de matières métalliques, selon la revendication 10.

Selon un mode de réalisation, les moyens de broyage sont adaptés pour effectuer un broyage jusqu'à un passant de tamis Dmax inférieur ou égal à 50 mm, de préférence compris entre 20 et 30 mm.

Selon un mode de réalisation, l'installation comprend également une conduite de collecte des gaz de pyrolyse alimentant une chambre de combustion, et éventuellement, en sortie de la chambre de combustion, une chambre de contact alimentée par un apport de charbon actif et un apport de bicarbonate de soude.

La présente invention permet de surmonter les inconvénients de l'état de la technique. Elle fournit plus particulièrement un procédé simple et économe en énergie, permettant d'obtenir un bon rendement en métaux recyclés.

Ceci est accompli grâce à la constatation surprenante que la pyrolyse directe de matériaux préalablement broyés de façon seulement grossière (un broyage fin étant inutile) permet d'obtenir directement un mélange des différents constituants sous forme individualisée : notamment les résidus carbonés d'une part et les différents métaux d'autre part.

Selon certains modes de réalisation particuliers, l'invention présente également une ou plusieurs des caractéristiques avantageuses énumérées ci-dessous.
- Le procédé selon l'invention permet d'éliminer les résines époxy et les plastiques constituants des cartes électroniques ainsi que le chlore et une grande partie du brome tout en évitant une perte en métaux par oxydation ou distillation compte tenu de la basse température et des conditions non-oxydantes de l'opération. La matière est ainsi concentrée en métaux.
- Le procédé selon l'invention permet lors du refroidissement des gaz de combustion des gaz produits pendant la pyrolyse de récupérer dans de bonnes conditions l'énergie contenue dans ces gaz.
- La matière ainsi pyrolysée peut être traitée avantageusement dans les outils classiques de la métallurgie du cuivre en s'affranchissant de certaines limites technologiques de ces outils et plus précisément de la teneur en matières volatiles (chaînes carbonées) et des halogènes.
- Dans le cas du traitement des cartes électroniques, la décomposition des résines époxy lors de la pyrolyse a pour effet de libérer tous les composants solidaires du support : le cuivre, les composants électroniques, les composants métalliques... Cette désolidarisation du support permet une utilisation très efficace du tri magnétique (plus efficace que la désolidarisation que l'on opérerait par un broyage très fin).
- Le procédé selon l'invention permet de maximiser le rendement de récupération des métaux, c'est-à-dire de minimiser les pertes de métaux au cours du processus.
- Le procédé selon l'invention permet de séparer l'aluminium des autres métaux en cours de processus, de sorte à faciliter le traitement aval des métaux récupérés. Dans le cas des procédés pyro-métallurgiques, l'aluminium présente en effet un comportement néfaste à la fluidité des scories. Dans le cas des procédés hydro-métallurgiques, l'aluminium du fait de sa réactivité chimique entraîne une surconsommation de réactifs chimiques.
- Le traitement des gaz issus de la pyrolyse (comprenant une postcombustion) permet de rendre le procédé propre sans nécessiter de manipulation lourde d'halogènes, de composés soufrés ou d'émissions de métaux lourds.

### BREVE DESCRIPTION DES FIGURES

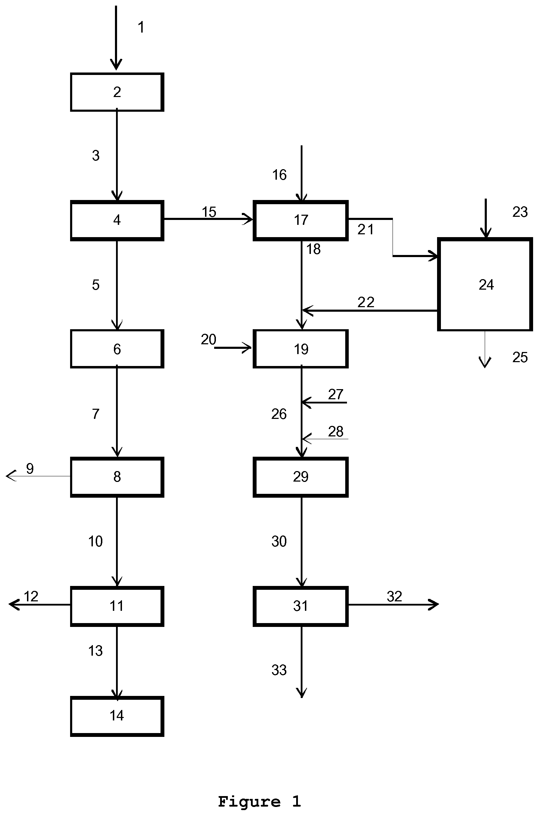

La **figure 1** représente de manière schématique un exemple d'installation de traitement de déchets électroniques selon l'invention.

### DESCRIPTION DE MODES DE REALISATION DE L'INVENTION

L'invention est maintenant décrite plus en détail et de façon non limitative dans la description qui suit.

### Installation de traitement de déchets électroniques

En faisant référence à la **figure 1****,** une installation de traitement de déchets électroniques selon l'invention comprend de manière schématique les éléments qui suivent.

En entrée de l'installation de traitement est prévue une ligne d'amenée de déchets électroniques en vrac 1. Cette ligne d'amenée de déchets électroniques 1 alimente des moyens de broyage et d'échantillonnage 2. Les moyens de broyage et d'échantillonnage peuvent notamment comprendre un broyeur principal permettant de réduire la taille des déchets à moins de 50 mm, un échantillonneur primaire permettant de prélever un échantillon primaire représentatif du flux total (par exemple 10 % du flux total), un second broyeur permettant de broyer l'échantillon primaire à une taille de 10 mm, un échantillonneur secondaire représentatif de l'échantillon primaire (par exemple 10 % du flux de l'échantillon primaire), éventuellement un troisième broyeur et un échantillonneur tertiaire.

Un exemple préféré de broyeur principal est un broyeur à couteaux équipé d'une grille de 25 mm. Ce type de broyeur a l'avantage de limiter la production de fines.

En sortie des moyens de broyage et d'échantillonnage 2, une ligne d'amenée de déchets broyés 3 alimente en déchets broyés une installation de pyrolyse 4. Un silo tampon (non représenté) peut être prévu entre les moyens de broyage et d'échantillonnage 2 et l'installation de pyrolyse 4. L'installation de pyrolyse 4 peut notamment être du type four à vis, four réverbère, four tournant, four à lit fluidisé, four à étages...

De préférence, l'installation de pyrolyse 4 est un four à étages, par exemple d'environ 100 m², chauffé directement au gaz. La puissance de l'installation peut être typiquement d'environ 1000 kW.

En sortie de l'installation de pyrolyse 4 sont prévues une ligne d'amenée de résidus pyrolysés 5 et une conduite de collecte des gaz de pyrolyse 15.

La ligne d'amenée de résidus pyrolysés 5 alimente des moyens de refroidissement 6. Les moyens de refroidissement 6 peuvent notamment comprendre un échangeur de chaleur. Une vis jacketée d'environ 50 m² de surface et refroidie à l'eau peut notamment être appropriée.

En sortie des moyens de refroidissement 6, une ligne d'amenée de résidus refroidis 7 alimente un séparateur magnétique primaire 8. Le séparateur magnétique primaire 8 peut être un simple électroaimant disposé au-dessus d'une bande de convoyage.

Une ligne de récupération de fraction métallique ferreuse 9 et une ligne de récupération de résidus non-ferreux 10 sont connectées en sortie du séparateur magnétique primaire 8.

La ligne de récupération de résidus non-ferreux 10 alimente à son tour un séparateur magnétique secondaire 11, appareil spécialement conçu pour cette fonction. Le séparateur magnétique secondaire 11 peut par exemple utiliser des courants de Foucault.

Une ligne de récupération de fraction métallique non-ferreuse 12 et une ligne de récupération de résidus non magnétiques 13 sont connectées en sortie du séparateur magnétique secondaire 11. La ligne de récupération de résidus non magnétiques 13 alimente à son tour des moyens de conditionnement 14.

Selon un mode de réalisation particulier, la conduite de collecte des gaz de pyrolyse 15 alimente une chambre de combustion 17, qui est également alimentée par une conduite d'arrivée d'air 16. La chambre de combustion 17 peut être du type chambre cylindrique métallique protégée par une ou plusieurs couches de briques.

En sortie de la chambre de combustion 17, une conduite de collecte des produits de combustion 18 alimente des moyens de refroidissement 19. Les moyens de refroidissement 19 peuvent par exemple consister en une tour de refroidissement 19, alimentée par une injection d'eau pulvérisée 20, ou un échangeur refroidisseur de fumées (air-fumées ou eau-fumées).

Une conduite de collecte des produits de combustion refroidis 26 est connectée en sortie des moyens de refroidissement 19 et alimente une chambre de contact 29. Un apport de charbon actif 27 et un apport de bicarbonate de soude 28 sont également prévus en entrée de la chambre de contact 29. La chambre de contact 29 peut être du type cylindrique ayant un volume suffisant permettant d'avoir un temps de séjour des produits de combustion d'environ deux secondes.

En sortie de la chambre de contact 29, une conduite de collecte de produits traités 30 alimente un filtre 31 en sortie duquel sont prévues une ligne de récupération de gaz épurés 33 et une ligne de récupération d'halogènes 32. Le filtre 31 peut être du type filtre à manches ou électro-filtre.

Selon une possibilité optionnelle, on peut prévoir un système de refroidissement préliminaire en amont des moyens de refroidissement 19. Ce système de refroidissement préliminaire comprend une conduite de prélèvement 21 en sortie de la chambre de combustion 17, qui alimente un échangeur 24, puis rejoint la conduite de collecte des produits de combustion 18. L'échangeur 24 est également alimenté par une amenée de fluide caloporteur 23. La sortie 25 du fluide caloporteur assure la récupération de l'énergie.

### Procédé de traitement de déchets électroniques

On décrit ci-dessous un exemple de procédé de traitement de déchets électroniques permettant une valorisation des métaux qu'ils contiennent.

Par « déchets électroniques » on entend les matériaux usagés comprenant des composants électroniques. Les déchets électroniques peuvent comprendre des composants électroniques individuels, des téléphones portables et tous autres appareils de petite taille contenant des cartes électroniques. De manière préférée, les déchets électroniques comprennent ou consistent en des cartes électroniques, c'est-à-dire des plaquettes constituées de circuits imprimés sur lesquels sont soudés des composants électroniques. La suite du procédé est donc décrite en relation avec le recyclage des cartes électroniques.

Le procédé trouve toutefois également à s'appliquer dans le cas d'autres types de matériaux de départ, à savoir de manière générale les matériaux (de préférence matériaux usagés ou déchets) comprenant une fraction métallique (notamment une fraction métallique contenant des métaux précieux) et une fraction plastique. La fraction plastique peut comprendre notamment des résines époxys, du polyéthylène ou du polychlorure de vinyle. Et la fraction métallique peut comprendre notamment des métaux ferreux, du cuivre, du plomb, de l'aluminium, du zinc, des métaux précieux (or, argent, platine, palladium, rhodium, ruthénium, iridium, osmium). Par exemple, le procédé peut s'appliquer à des résidus de broyage automobile.

Le procédé décrit ici comprend les 5 étapes principales suivantes :
(1) broyage;
(2) pyrolyse ;
(3) refroidissement ;
(4) tris magnétiques ; et
(5) traitement des gaz.

Cet exemple correspond à l'utilisation de l'installation de traitement décrite ci-dessus en relation avec la **figure 1****.**

La capacité de traitement est de l'ordre de 3 tonnes par heure.

A l'étape (1), les cartes électroniques sont broyées au niveau des moyens de broyage 2. Le broyage s'effectue de préférence jusqu'à une taille Dmax de 25 mm (Dmax étant défini comme le passant de tamis). Les cartes broyées sont ensuite stockées dans un silo tampon.

Le silo tampon alimente à environ 3 tonnes par heure l'installation de pyrolyse 4, dans laquelle on procède à la pyrolyse de l'étape (2). Pour cette étape (2), on chauffe les cartes broyées dans le four jusqu'à une température comprise entre 300 et 450°C, de préférence d'environ 400°C, dans un réacteur adapté, et ce essentiellement en l'absence d'oxygène (en milieu réducteur ou neutre). Plus précisément, les brûleurs sont réglés avec un défaut d'air et le facteur d'air (rapport entre l'air de combustion et l'air théorique de combustion neutre) est compris entre 0,7 et 0,9. La durée de la pyrolyse est ajustée afin d'obtenir une décomposition complète des chaînes carbonées composant la fraction plastique (notamment les chaînes des résines époxys). Par exemple, la durée peut être comprise entre 10 et 30 minutes. Un ajout de vapeur d'environ 1 tonne/heure au niveau des étages du four permet de maîtriser la température de ceux-ci.

Au cours de l'étape (3), les résidus pyrolysés passent par les moyens de refroidissement 6. Cette étape permet de réduire la température des résidus pyrolysés jusqu'à une température comprise entre 60 et 100°C.

Puis, l'étape (4) comprend la séparation proprement dite des métaux. Cette étape permet d'enrichir le résidu solide en métaux précieux et de diminuer la concentration des éléments nuisibles au traitement ultérieur du résidu pyrolysé (notamment l'aluminium).

Dans un premier temps, les résidus refroidis passent par le séparateur magnétique primaire 8, typiquement un simple électroaimant disposé au-dessus d'un convoyeur à bande. Ainsi, on extrait la fraction métallique ferreuse des résidus. Cette fraction métallique ferreuse comprend principalement le fer et les dérivés du fer, mais éventuellement, selon l'origine des cartes électroniques, la fraction métallique ferreuse peut aussi comprendre (être mêlée à) de l'or. C'est le cas notamment lorsque les cartes électroniques sont flashées à l'or. De préférence, la fraction métallique ferreuse ne comprend pas plus de 1 % d'aluminium.

Dans un deuxième temps, les résidus débarrassés de la fraction métallique ferreuse subissent une extraction magnétique des non-ferreux au niveau du séparateur magnétique secondaire 11, typiquement en utilisant des courants de Foucault. Ainsi, on extrait une fraction métallique non-ferreuse, qui comprend notamment de l'aluminium et du zinc. L'aluminium ainsi récupéré peut être vendu pour être recyclé. D'un autre côté, le reste des résidus (résidus non magnétiques) est récupéré *via* la ligne de récupération de résidus non magnétiques 13. De préférence, les résidus non magnétiques ne comprennent pas plus de 2 % d'aluminium.

Afin de pouvoir effectuer l'extraction magnétique des non-ferreux par courants de Foucault, il importe que la fraction métallique non-ferreuse (et notamment l'aluminium) soit sous forme essentiellement non-oxydée. Par conséquent, le procédé est mis en oeuvre de telle sorte que les métaux composant la fraction métallique non-ferreuse, et en premier lieu l'aluminium, ne sont pas oxydés avant l'étape d'extraction magnétique des non-ferreux. Typiquement, en cas de chauffage par flamme directe, le réglage de la flamme est effectué avec un déficit d'oxygène (par exemple 90 % de la stoechiométrie) ; en cas de chauffage indirect, l'atmosphère doit être réductrice. Par ailleurs, on préfère travailler en dessous du point de fusion de l'aluminium, afin d'éviter que des traces d'oxygène n'oxydent le métal fondu (plus facile à oxyder que le métal solide).

Selon la teneur en métaux précieux de la fraction métallique ferreuse, il est possible soit de valoriser séparément la fraction métallique ferreuse soit de la mélanger à nouveau avec la fraction des résidus non magnétiques après la deuxième séparation magnétique (au niveau de la ligne de récupération de résidus non magnétiques 13).

La valorisation de la fraction métallique ferreuse peut comprendre une récupération des métaux précieux qu'elle contient par exemple selon les procédés suivants : recyclage de la partie magnétique riche en métaux précieux à l'entrée des fours à cuivre, et traitement des boues anodiques issues de l'électro-raffinage des anodes en cuivre coulées en sortie de four ; lavage au plomb de la partie magnétique pour solubiliser dans le plomb les métaux précieux, et traitement du plomb selon toute méthode conventionnelle pour récupérer ces métaux précieux (telle que zingage, distillation et coupellation, ou traitement sur un électroraffinage de type Betts).

Les résidus non magnétiques comprennent notamment du carbone, des fibres de verre, du cuivre, du plomb, de l'étain et généralement des métaux précieux. Les métaux précieux en question peuvent comprendre de l'or, de l'argent, du platine, du palladium, du rhodium, du ruthénium, de l'iridium et / ou de l'osmium. Ces résidus non magnétiques sont ensuite conditionnés en big-bags ou en vrac pour être traités soit par hydrométallurgie soit par pyrométallurgie.

L'hydrométallurgie peut comprendre une étape d'attaque par de l'acide sulfurique en milieu oxydant, suivie d'un électrowining permettant de récupérer le cuivre, les résidus d'attaque étant réduits dans un four tournant contenant du plomb afin de solubiliser les métaux précieux, l'étain et le plomb. Le plomb et l'étain peuvent être raffinés par une électrolyse de type Betts, les boues contenant essentiellement les métaux précieux.

Dans le cadre de la pyrométallurgie, les résidus sont recyclés à l'entrée des fours à cuivre, puis on traite les boues anodiques issues de l'électro-raffinage des anodes en cuivre coulées à la sortie du four.

Quant à l'étape (5), elle est effectuée concomitamment à l'étape (2), puisqu'elle concerne le traitement des gaz issus de la pyrolyse.

Les gaz issus de la pyrolyse contiennent des produits de combustion des brûleurs, de la vapeur d'eau ainsi que les gaz issus de la décomposition des résines époxy et autres matières à chaînes carbonées.

Ces gaz sont brûlés dans la chambre de combustion 17 à une température suffisante pour permettre la destruction des dioxines. Une température comprise entre environ 850 et environ 1100°C peut être appropriée. De l'acide chlorhydrique et de l'acide bromhydrique sont ainsi produits.

Après refroidissement des gaz à une température comprise entre environ 180 et environ 200°C (au niveau des moyens de refroidissement 19), on procède à une injection de charbon actif (par exemple environ 50 mg/m³) et de bicarbonate de sodium (par exemple environ 20 kg/h) afin de fixer le reste de dioxines, et de faire réagir HCl et HBr avec le bicarbonate du sodium pour former du bromure et du chlorure de sodium. Les réactions ont lieu dans la chambre de contact 29, avec un temps de contact d'environ 2 secondes.

Après filtration, on récupère essentiellement un mélange de bromure de sodium et de chlorure de sodium ; ce mélange peut être valorisé pour récupération du brome.

On peut également prévoir de récupérer l'énergie des produits de combustion (échange de chaleur au niveau de l'échangeur 24), cette énergie pouvant être recyclée à d'autres étapes du procédé.

Il faut noter que l'étape (5) peut avantageusement être remplacée par une étape de condensation de la phase gazeuse pour la valorisation des produits de la décomposition des chaînes carbonées (phénol, bisphénol, bromophénol et autres composants).

### EXEMPLE

Le présent exemple illustre l'invention sans la limiter.

On met en oeuvre le procédé décrit ci-dessus pour traiter des cartes électroniques usagées. On réintroduit la fraction métallique ferreuse après la deuxième séparation magnétique. Le tableau ci-dessous donne une estimation de l'évolution de la composition chimique des produits au cours des différentes étapes du procédé.

| | **Déchets bruts** | **Après la pyrolyse** | **Après la double séparation magnétique** |
|---|---|---|---|
| **Cu (%)** | 17 | 23 | 24,5 |
| **Al (%)** | 6,5 | 8,8 | 2,8 |
| **Fe (%)** | 5 | 6,7 | 7,14 |
| **Métaux précieux (g/t)** | 1000 | 1350 | 1440 |
| **Chaînes carbonées (%)** | 34 | 0 | 0 |
| **Carbone (%)** | 0 | 11,1 | 11,8 |
| **Cl (%)** | 0,4 | 0,0 | 0,0 |
| **Br (%)** | 0,6 | 0,3 | 0,0 |
| **SiO₂ (%)** | 22 | 29,7 | 31,6 |

## Revendications

1. Procédé de traitement de matériaux contenant un mélange de matières plastiques et de matières métalliques comprenant des métaux précieux et de l'aluminium, lesdits matériaux étant des déchets électroniques, ledit procédé comprenant :
- le broyage (2) des matériaux à traiter ;
- la pyrolyse (4) des matériaux broyés à une température comprise entre 300 et 450°C pour une durée comprise entre 10 et 30 minutes avec un facteur d'air, c'est-à-dire un rapport entre l'air de combustion et l'air théorique de combustion neutre compris entre 0,7 et 0,9;
- une première séparation magnétique (8) effectuée au moyen d'un aimant ou d'un électroaimant sur les matériaux pyrolysés, fournissant d'une part une fraction métallique ferreuse et d'autre part des résidus non-ferreux ;
- une deuxième séparation magnétique (11) effectuée au moyen d'un séparateur à courants de Foucault sur les résidus non-ferreux, fournissant d'une part une fraction métallique non-ferreuse comprenant de l'aluminium et d'autre part des résidus non-magnétiques comprenant des métaux précieux.

2. Procédé selon la revendication 1, dans lequel les déchets électroniques sont des cartes électroniques usagées.

3. Procédé selon la revendication 1 ou 2, dans lequel le broyage est effectué jusqu'à un passant de tamis Dmax inférieur ou égal à 50 mm, de préférence compris entre 20 et 30 mm.

4. Procédé selon l'une des revendications 1 à 3, comprenant également une étape de combustion des gaz (17) issus de la pyrolyse, éventuellement suivie d'une étape de neutralisation (29) des gaz avec du bicarbonate de sodium.

5. Procédé selon l'une des revendications 1 à 4, dans lequel les métaux précieux comprennent de l'or, de l'argent, du platine, du palladium, du rhodium, du ruthénium, de l'iridium et / ou de l'osmium.

6. Procédé selon l'une des revendications 1 à 5, dans lequel :
- la fraction métallique ferreuse comprend du fer et / ou des dérivés de fer, et éventuellement de l'or ; et / ou
- la fraction métallique non-ferreuse comprend du zinc.

7. Procédé selon l'une des revendications 1 à 6, dans lequel les résidus non-magnétiques comprennent du cuivre, du plomb, de l'étain, des fibres de verre, du carbone.

8. Procédé selon l'une des revendications 1 à 7, dans lequel la fraction métallique ferreuse est combinée aux résidus non-magnétiques après la deuxième séparation magnétique.

9. Procédé selon l'une des revendications 1 à 8, comprenant une étape ultérieure de traitement des résidus non-magnétiques permettant de récupérer le cuivre contenu dans les résidus non-magnétiques et / ou de récupérer des métaux précieux contenus dans les résidus non-magnétiques, en particulier choisis parmi l'or, l'argent, le plomb, l'étain le platine, le palladium, le rhodium, le ruthénium, l'iridium et / ou l'osmium.

10. Installation de traitement de matériaux contenant un mélange de matières plastiques et de matières métalliques, lesdites matières métalliques comprenant des métaux précieux et de l'aluminium, lesdits matériaux étant des déchets électroniques, ladite installation comprenant successivement en ligne :
- des moyens de broyage (2) ;
- une installation de pyrolyse (4) adaptée à effectuer une pyrolyse à une température comprise entre 300 et 450°C avec un facteur d'air, c'est-à-dire un rapport entre l'air de combustion et l'air théorique de combustion neutre, compris entre 0,7 et 0,9;
- un séparateur magnétique primaire (8) comprenant un aimant ou électroaimant disposé au-dessus d'une bande de convoyage; et
- un séparateur magnétique secondaire (11) comprenant un séparateur à courants de Foucault.

11. Installation selon la revendication 10, dans laquelle les moyens de broyage sont adaptés pour effectuer un broyage jusqu'à un passant de tamis Dmax inférieur ou égal à 50 mm, de préférence compris entre 20 et 30 mm.

12. Installation selon l'une des revendications 10 à 11, comprenant également une conduite de collecte des gaz de pyrolyse (15) alimentant une chambre de combustion (17), et éventuellement, en sortie de la chambre de combustion (17), une chambre de contact (29) alimentée par un apport de charbon actif (27) et un apport de bicarbonate de soude (28).

## Patentansprüche

1. Ein Verfahren zur Behandlung von Materialien die eine Mischung von Kunststoff-/ und Metallmaterial enthalten, welches Edelmetalle und Aluminium umfasst, wobei es sich bei diesen Materialien um Elektronikabfall handelt, und wobei das Verfahren Folgendes umfasst:
- das Zermahlen (2) der zu behandelnden Materialien;
- die Pyrolyse (4) der zermahlten Materialien bei einer Temperatur zwischen 300 und 450°C, über eine Dauer von 10 bis 30 Minuten, mit einem Luftfaktor, d.h., einem im Bereich von 0,7 und 0,9 liegenden Verhältnis zwischen der Verbrennungsluft und der theoretischen neutralen Verbrennungsluft;
- eine, mittels eines Magneten oder Elektromagneten, auf den pyrolysierten Materialien durchgeführte erste magnetische Trennung (8), die einerseits eine Eisenmetallfraktion und andererseits nicht eisenhaltige Rückstände liefert;
- eine, mittels eines Wirbelstromscheiders, auf die nicht eisenhaltigen Rückstände durchgeführte zweite magnetische Trennung (11), die einerseits eine Aluminium umfassende Nichteisenmetallfraktion und andererseits Edelmetall umfassende, nicht eisenhaltige Rückstände liefert.

2. Verfahren nach Anspruch 1, wobei der Elektronikabfall aus gebrauchten elektronischen Karten besteht.

3. Verfahren nach Ansprüchen 1 oder 2, wobei das Zermahlen bis zu einem Siebdurchgang von einem Dmax durchgeführt wird, der kleiner als 50 mm ist, vorzugsweise im Bereich von 20 und 30 mm liegt.

4. Verfahren nach einem der Ansprüche 1 bis 3, das ferner einen Schritt der Verbrennung der Pyrolysegase (17) umfasst, dem gegebenenfalls ein Schritt der Neutralisierung (29) der Gase mit Natriumbicarbonat folgt.

5. Verfahren nach einem der Ansprüche 1 bis 4, wobei die Edelmetalle Gold, Silber Platin, Palladium, Rhodium, Ruthenium, Iridium und/oder Osmium umfassen.

6. Verfahren nach einem der Ansprüche 1 bis 5, wobei:
- die Eisenmetallfraktion Eisen und/oder Eisenderivate, und gegebenenfalls Gold umfasst; und/oder
- die Nichteisenmetallfraktion Zink umfasst.

7. Verfahren nach einem der Ansprüche 1 bis 6, wobei die nichtmagnetischen Rückstände, Kupfer, Blei, Zinn, Glasfasern, Kohlenstoff umfassen.

8. Verfahren nach einem der Ansprüche 1 bis 7, wobei die Eisenmetallfraktion nach der zweiten magnetischen Trennung mit den nichtmagnetischen Rückständen kombiniert ist.

9. Verfahren nach einem der Ansprüche 1 bis 8, das einen weiteren Schritt der Behandlung der nichtmagnetischen Rückstände umfasst, der es ermöglicht das in den nichtmagnetischen Rückständen enthaltene Kupfer und/oder die in den nichtmagnetischen Rückständen enthaltenen Edelmetalle, insbesondere jene ausgewählt aus Gold, Silber, Blei, Zinn, Platin, Palladium, Rhodium, Ruthenium, Iridium und/oder Osmium zurückzugewinnen.

10. Anlage zur Behandlung von Materialien die eine Mischung von Kunststoff-/ und Metallmaterial enthalten, welches Edelmetalle und Aluminium umfasst, wobei es sich bei diesen Materialien um Elektronikabfall handelt, und wobei die Anlage in der Reihe nach Folgendes umfasst:
- Mahlmittel (2);
- eine Pyrolyseanlage (4), die ausgebildet ist um bei einer Temperatur zwischen 300 und 450°C mit einem Luftfaktor, d.h., einem im Bereich von 0,7 und 0,9 liegenden Verhältnis zwischen der Verbrennungsluft und der theoretischen neutralen Verbrennungsluft, eine Pyrolyse durchzuführen;
- ein primärer Magnetabscheider (8), der einen, über einem Förderband angeordneten Magneten oder Elektromagneten umfasst; und
- ein sekundärer Magnetabscheider (11), der einen Wirbelstromscheider umfasst

11. Anlage nach Anspruch 10, wobei die Mahlmittel ausgebildet sind, um ein Zermahlen bis zu einem Siebdurchgang von einem Dmax durchzuführen, der kleiner als 50 mm ist, vorzugsweise im Bereich von 20 und 30 mm liegt.

12. Anlage nach Ansprüchen 10 und 11, ferner umfassend eine Sammelleitung der Pyrolysegase (15) die eine Brennkammer (17) versorgt und, gegebenenfalls, am Ausgang der Brennkammer (17), eine Kontaktkammer (29) die durch eine Zufuhr von Aktivkohle (27) und von Natriumbicarbonat (28) versorgt wird.

## Claims

1. A method for treating materials containing a mixture of plastic and metal materials containing precious metals and aluminum, wherein the material is electronic scrap, said method comprising:
- shredding (2) the materials to be processed;
- pyrolysis (4) of the shredded material at a temperature between 300 and 450°C for a duration of between 10 and 30 minutes and with an air factor, i.e. the ratio between combustion air and the theoretical air for neutral combustion of between 0.7 and 0.9;
- a first magnetic separation (8) effected by a magnet or electromagnet performed on the pyrolyzed materials, providing, firstly, a ferrous metal fraction and, secondly, non-ferrous residues ;
- a second magnetic separation (11) using a separator using eddy currents performed on the non-ferrous residues, providing, firstly, a non-ferrous metal fraction including aluminium and, on the other hand, non-magnetic residues including precious metals.

2. The method according to claim 1, wherein the electronic waste is used electronic circuit boards.

3. The method according to one of claims 1 or 2, wherein the shredding is performed down to a screen passage size Dmax not exceeding 50 mm, preferably between 20 and 30 mm.

4. The method according to one of claims 1-3, further comprising a step of combustion of the gases (17) from pyrolysis, optionally followed by a step of neutralizing (29) the gas with sodium bicarbonate.

5. The method according to one of claims 1-4, wherein the precious metals include gold, silver, platinum, palladium, rhodium, ruthenium, iridium and /or osmium.

6. The method according to one of claims 1-5, wherein:
- the ferrous metal fraction comprises iron and/or derivatives of iron, and possibly gold and/or
- the non-ferrous metal fraction includes zinc.

7. The method according to one of claims 1-6, wherein the non-magnetic residues include copper, lead, tin, glass fibers, carbon.

8. The method according to one of claims 1-7, wherein the ferrous metal fraction is combined with non-magnetic residues after the second magnetic separation.

9. The method according to one of claims 1-8, comprising a further step of processing the non-magnetic residues to recover the copper content in the non-magnetic residue and/or recover precious metals contained in the non-magnetic residue in particular selected from gold, silver, lead, tin, platinum, palladium, rhodium, ruthenium, iridium and/or osmium.

10. A plant for treating material containing a mixture of plastic and metal materials, said metal materials containing precious metals and aluminum, the said material is electronic waste, the plant comprising successively:
- shredding means (2);
- a pyrolysis facility (4) with means for providing pyrolysis at a temperature between 300 and 450°C and with an air factor, i.e. the ratio between combustion air and the theoretical air for neutral combustion of between 0.7 and 0.9;
- a primary magnetic separator (8) comprising a magnet or electromagnet arranged above a conveyor belt; and
- a secondary magnetic separator (11) comprising a separator using eddy currents.

11. The plant according to claim 10, wherein the shredding means are adapted to perform shredding down to a screen passage size Dmax not exceeding 50 mm, preferably between 20 and 30 mm.

12. The plant according to one of claims 10 to 11, further comprising a flow line for collecting pyrolysis gases (15) supplying a combustion chamber (17), and optionally, at the exit from the combustion chamber (17), a contact chamber (29) fed by a supply of activated carbon (27) and a supply of sodium bicarbonate (28).
